# EUROPÄISCHE PATENTSCHRIFT

(11) **EP 1 164 184 B1**
(45) Veröffentlichungstag und Bekanntmachung des Hinweises auf die Patenterteilung: **05.01.2005**
(21) Anmeldenummer: 01114117.3
(22) Anmeldetag: 11.06.2001
(51) Int. Cl.: C12C 11/00, C12G 1/022, C12N 9/00

(54) **Enzymmischungen enthaltend ein Enzym mit Beta-Glucanaseaktivität, ihre Verwendung zur Verminderung oder Vermeidung von Gushing**
Mixtures of enzymes containing an enzyme with beta-glucanase activity, to be used for decreasing or preventing gushing
Mélanges d'enzymes contenant une enzyme avec activité de beta-glucanase, leur utilisation pour diminuer ou éviter le giclage

(30) Priorität: 09.06.2000 EP 00112346
(43) Veröffentlichungstag der Anmeldung: 19.12.2001
(73) Patentinhaber: Danstar Ferment AG, 6304 Zug (CH)
(72) Erfinder: Burger, Karl, A-3550 (AT); Bach, Hans-Peter, Dipl.-Ing., 54295 Trier (DE)
(74) Vertreter: Meyers, Hans-Wilhelm, Dr.Dipl.-Chem.

(56) Entgegenhaltungen:
- WO-A-97/32014
- WO-A-98/03627
- US-A- 4 886 672
- ENKENLUND J: "Externally added beta-glucanase." PROCESS BIOCHEMISTRY 1972 A/S GRINDSTEDVAERKET, BRABRAND, DENMARK, Bd. 7, Nr. 8, Seiten 27-29, XP000982885
- HINCHLIFFE E: ".Nb-Glucanase: the successful application of genetic engineering." JOURNAL OF THE INSTITUTE OF BREWING 1985 RES. DEP., BASS PLC, 137 HIGH STREET, BURTON-ON-TRENT, DE14 1JZ, UK, Bd. 91, Nr. 6, Seiten 384-389, XP000982862

## Beschreibung

Gegenstand der vorliegenden Erfindung ist die Verwendung eines Enzyms mit β-Glucanase Aktivität zur Verminderung oder Vermeidung eines spontanen Überschäumens von durch Gärungsprozesse hergestellten Erzeugnissen beim Öffnen von solche Erzeugnisse enthaltenden Behältern, ein Verfahren unter Verwendung dieses Enzyms und Gärungsgetränke erhältlich mittels des erfindungsgemäßen Verfahrens.

Die WO98/03627 offenbart ein verbessertes Verfahren zur Herstellung von Malz, bei dem verbesserte Eigenschaften des Produktes durch den Zusatz von aktivierten mikrobiellen Kulturen erzielt werden.

J. Enkenlund ("Externally added beta-glucanase", Process Biochemistry 1972 A/S, Grindstedvaerket, Brabrand, Denmark, Bd. 7, Nr. 8, Seiten 27-29) beschreibt eine Untersuchung, die zu dem Ergebnis kommt, dass beim Brauprozess durch den externen Zusatz von Beta-Glucanase die Filtrierbarkeit des Produkts verbessert wird.

Hinchliffe, E. ("Beta-Glucanase: the successful application of genetic engineering", Journal of the Institute of Brewing, 1985, Res. Dep., Bass PLC, 137 High Street, Burton-on-Trent, DE14 1JZ, UK, Bd. 91, Nr. 6, Seiten 384-389) beschreibt die Bedeutung von β-Glucanase im Brauprozess von Bier und untersucht die Möglichkeiten, Hefen bereitzustellen, die mehr β-Glucanase und β-Glucanase mit verbesserten Eigenschaften herstellen.

Das spontane Überschäumen von durch Gärungsprozesse hergestellten Erzeugnissen, insbesondere Sekt, beim Öffnen von diese Erzeugnisse enthaltenden Behältern ist ein Phänomen, das vom Erzeuger und Konsumenten gleichermaßen nicht erwünscht ist. Bislang hat man sich nicht in der Lage gesehen, bereits bei der Herstellung von Sekt oder Bier, Vorkehrungen zu ergreifen, die das spontane Überschäumen des Produkts unterbinden würde. Das als Gushing bezeichnete Phänomen tritt nämlich in unberechenbarer Weise auf. Lediglich durch nachträgliches Zusetzen von bestimmten Fettsäuren (siehe GB 1 376 306) oder durch bestimmte Verschlüsse fûr die Getränkebehälter (EP 0000091) wurde versucht, das Problem zu Lösen.

Überraschenderweise wird durch die erfindungsgemäße Verwendung eines Enzyms mit β-Glucanase Aktivität das spontane Überschäumen von durch Gärungsprozesse hergestellte Erzeugnisse beim Öffnen von solche Erzeugnisse enthaltenden Behältern vermindert oder vermieden.

Vorzugsweise ist das erfindungsgemäß einsetzbare Enzym eine natürlich vorkommende oder rekombinante β-Glucanase.

Zur Steuerung des Gärungsprozesses nützliche andere Bestandteile wie andere Enzyme können weiterhin in Zusammenwirkung mit der β-Glucanase verwendet werden. So ist der zusätzliche Einsatz von weiteren Enzymen wie Pektinesterase, Polygalacturonase und/oder Pektinlyase erfindungsgemäß möglich.

Erfindungsgemäß eingesetzt wird auch eine Enzymmischung, bevorzugt enthaltend mindestens ein Enzym mit β-Glucanaseaktivität und mindestens zwei Enzyme mit einer Aktivität ausgewählt aus der Gruppe bestehend aus Pektinesterase, Polygalacturonase und/oder Pektinlyase. Die Enzymmischung kann darüber hinaus auch weitere Enzyme oder andere Hilfsstoffe für die in Betracht kommenden Gärprozesse enthalten.

Die Enzymmischung kann in Tablettenform oder als Pulver oder Granulat in fester Form vorliegen. Sie kann auch in flüssiger Form zusammengestellt vorliegen.

Gegenstand der vorliegenden Erfindung ist ein Verfahren zur Verminderung oder Vermeidung eines spontanen Überschäumens von durch Gärungsprozesse hergestellten Erzeugnissen beim Öffnen von solche Erzeugnisse enthaltenden Behältern, wobei ein Enzym mit β-Glucanase Aktivität vor oder bei der Gärungsstufe einem Gärungsansatz zugesetzt wird und der Gärungsprozess in Gegenwart des Enzyms mit β-Glucanase Aktivität durchgeführt wird, woraufhin sich eine Aufarbeitung des durch den Gärprozess hergestellten Erzeugnisses in an sich bekannter Weise anschließt.

In einer Ausführungsform des erfindungsgemäßen Verfahrens umfasst der Gärungsprozess die Gärungsstufe von Bier. Das erfindungsgemäße Verfahren ist in einer weiteren bevorzugten Ausführungsform zur Herstellung von Sekt geeignet. In diesem Falle umfasst der Gärungsprozess die zweite Gärungsstufe von Wein zu Sekt. Als Enzym wird vorzugsweise natürlich vorkommende oder rekombinante β-Glucanase eingesetzt.

Neben dem Enzym mit β-Glucanaseaktivität können im erfindungsgemäßen Verfahren weitere Enzyme wie Pektinesterase, Polygalacturonase und/oder Pektinlyase eingesetzt werden.

Vorzugsweise wird das Enzym mit β-Glucanaseaktivität in Mengen von 400 bis 800, insbesondere von 450 bis 750 Einheiten β-Glucanase je Hektoliter Gärungsansatz den jeweiligen Gärungsansätzen zugemischt.

Die Einheiten werden dabei nach BGX (units of Beta Glucanase-according industry standard) gemessen. Eine BGX-Einheit bezeichnet die Menge an Enzym, die innerhalb von einer Minute 1 µmol von reduzierendem Zucker (Glukose) aus Glukan erzeugt. Dabei ist das Substrat Beta-Glukan aus Botrytis cinerea (10 g/l), die Temperatur 30°C, der pH-Wert 4,40 und die Inkubationszeit 10 Minuten. Nach 10 Minuten folgt der Inkubation (1 ml Substrat + 1 ml verdünntes Enzym) werden 2 ml DNS (Dinitrosalicylsäure) zugesetzt und für 10 Minuten gekocht. Nach dem Abkühlen wird die Farbintensität bei 540 nm gemessen.

Bei Sekt oder Schaumwein aus Rotwein kann das Enzym mit β-Glucanaseaktivität in Mengen bis zu 1000 Einheiten β-Glucanase pro Hektoliter zugemischt werden.

Vorzugsweise wirkt das Enzym mit β-Glucanaseaktivität bei der Durchführung des erfindungsgemäßen Verfahrens zur Sektherstellung mindestens 2 - 3 Wochen auf den Gärungsansatz ein. Der Grundwein für die Sektgärung wird in üblicher Weise hergestellt. Eventuell eingesetzte Bentonitpräparate werden abgetrennt. Danach wird die benötigte Menge Enzym mit β-Glucanaseaktivität in Grundwein gelöst und bei Tankgärung dem Tankinhalt direkt beigemischt. Die Behandlungstemperatur sollte vorzugsweise über 10 °C liegen. Die Einwirkungszeit des erfindungsgemäßen Enzympräparates bei 15 -19 °C beträgt mindestens 2 - 3 Wochen, bei rotem Sekt kann auch 2 - 4 Wochen inkubiert werden.

Das erfindungsgemäße Verfahren kann bei allen für die Sektherstellung geläufigen und weinrechtlich zugelassenen Gärungsverfahren angewendet werden. Darüber hinaus können allgemein Schaumweine, Perlweine, weinähnliche Gärungsgetränke, wie z. B. Cidre, erfindungsgemäß behandelt werden.

Die durch das erfindungsgemäße Verfahren erhältlichen Gärungsgetränke neigen nicht mehr zum Gushing. Damit handelt es sich um neuartige Gärungsgetränke mit unerwarteten Eigenschaften. Diese Gärungsgetränke sind ebenfalls Gegenstand der vorliegenden Erfindung.

## Patentansprüche

1. Verwendung eines Enzyms mit β-Glucanase Aktivität zur Verminderung oder Vermeidung eines spontanen Überschäumens von durch Gärungsprozesse hergestellten Erzeugnissen beim Öffnen von solche Erzeugnisse enthaltenden Behältern.

2. Verwendung nach Anspruch 1, wobei das Enzym eine natürlich vorkommende oder rekombinante β-Glucanase ist.

3. Verwendung nach Anspruch 1 oder 2, wobei zusätzlich weitere Enzyme wie Pektinesterase, Polygalacturonase und/oder Pektinlyase eingesetzt werden.

4. Verfahren zur Verminderung oder Vermeidung eines spontanen Überschäumens von durch Gärungsprozesse hergestellten Erzeugnissen beim Öffnen von solche Erzeugnisse enthaltenden Behältern, wobei ein Enzym mit β-Glucanase Aktivität vor oder bei der Gärungsstufe einem Gärungsansatz zugesetzt wird und der Gärungsprozess in Gegenwart des Enzyms mit β-Glucanase Aktivität durchgeführt wird, woraufhin sich eine Aufarbeitung des durch den Gärprozess hergestellten Erzeugnisses in an sich bekannter Weise anschließt.

5. Verfahren nach Anspruch 4, wobei der Gärungsprozess die Gärungsstufe von Bier umfasst.

6. Verfahren nach Anspruch 4, wobei der Gärungsprozess die zweite Gärungsstufe von Wein zu Sekt umfasst.

7. Verfahren nach einem der Ansprüche 4 bis 6, wobei als Enzym natürlich vorkommende oder rekombinante β-Glucanase ist.

8. Verfahren nach einem der Ansprüche 4 bis 7, wobei neben dem Enzym mit β-Glucanaseaktivität weitere Enzyme wie Pektinesterase, Polygalacturonase und/oder Pektinlyase eingesetzt werden.

9. Verfahren nach einem der Ansprüche 4 bis 8, wobei das Enzym mit β-Glucanaseaktivität in Mengen von 400 bis 800 Einheiten β-Glucanase, gemessen nach BGX (units of Beta Glucanase-according industry standard) den jeweiligen Gärungsansätzen zugemischt werden.

10. Verfahren nach einem der Ansprüche 4 bis 9, wobei zur Sektherstellung das Enzym mit β-Glucanaseaktivität mindestens 2 - 3 Wochen auf den Gärungsansatz einwirkt.

11. Gärungsgetränk, ausgenommen Bier, erhältlich durch ein Verfahren nach einem der Ansprüche 4 bis 10.

## Claims

1. Use of an enzyme having β-glucanase activity for reducing or avoiding the spontaneous gushing of products prepared by fermentation processes upon the opening of containers containing such products.

2. The use according to claim 1, wherein said enzyme is a naturally occurring or recombinant β-glucanase.

3. The use according to claim 1 or 2, wherein further enzymes, such as pectin esterase, polygalacturonase and/or pectin lyase, are additionally employed.

4. A method for reducing or avoiding the spontaneous gushing of products prepared by fermentation processes upon the opening of containers containing such products, in which an enzyme having β-glucanase activity is added to a fermentation mixture before or during the fermentation step, and the fermentation process is performed in the presence of said enzyme having β-glucanase activity, followed by processing the product prepared by the fermentation process in a per se known manner.

5. The method according to claim 4, wherein said fermentation process comprises the fermentation step of beer.

6. The method according to claim 4, wherein said fermentation process comprises the second fermentation step of wine to form sparkling wine.

7. The method according to any of claims 4 to 6, wherein said enzyme is naturally occurring or recombinant β-glucanase.

8. The method according to any of claims 4 to 7, wherein further enzymes, such as pectin esterase, polygalacturonase and/or pectin lyase, are employed in addition to said enzyme having β-glucanase activity.

9. The method according to any of claims 4 to 8, wherein said enzyme having β-glucanase activity is admixed with the respective fermentation mixtures in quantities of from 400 to 800 units of β-glucanase, measured according to BGX (units of beta glucanase according to industry standard).

10. The method according to any of claims 4 to 9, wherein said enzyme having β-glucanase activity acts on the fermentation mixture for at least 2 to 3 weeks for the formation of sparkling wine.

11. A fermentation beverage, except for beer, obtainable by a method according to any of claims 4 to 10.

## Revendications

1. Utilisation d'une enzyme avec activité de β-glucanase pour diminuer ou éviter un moussage excessif spontané de produits fabriqués par des processus de fermentation lors de l'ouverture de récipients contenant ces produits.

2. Utilisation selon la revendication 1, selon laquelle l'enzyme est une β-glucanase naturellement présente ou recombinante.

3. Utilisation selon la revendication 1 ou 2, selon laquelle en outre d'autres enzymes comme la pectinestérase, la polygalacturonase et/ou la pectinelyase sont introduites.

4. Procédé pour diminuer ou éviter un moussage excessif spontané de produits fabriqués par des processus de fermentation lors de l'ouverture de récipients contenant ces produits, selon lequel une enzyme avec activité de β-glucanase est ajoutée, avant ou lors de l'étape de fermentation, à un adjuvant de fermentation et le processus de fermentation est réalisé en présence de l'enzyme avec activité de β-glucanase, à la suite de quoi succède un traitement du produit fabriqué par le processus de fermentation d'une manière connue en soi.

5. Procédé selon la revendication 4, selon lequel le processus de fermentation comprend l'étape de fermentation de la bière.

6. Procédé selon la revendication 4, selon lequel le processus de fermentation comprend la deuxième étape de fermentation du vin aboutissant au vin mousseux.

7. Procédé selon l'une des revendications 4 à 6, selon lequel en tant qu'enzyme, on utilise une β-glucanase naturellement présente ou recombinante.

8. Procédé selon l'une des revendications 4 à 7, selon lequel outre l'enzyme avec activité de β-glucanase, on introduit d'autres enzymes comme la pectinestérase, la polygalacturonase et/ou la pectinelyase.

9. Procédé selon l'une des revendications 4 à 8, selon lequel l'enzyme avec activité de β-glucanase est mélangée aux adjuvants de fermentation concernés dans des quantités allant de 400 à 800 unités de β-glucanase, mesurées selon BGX (units of Beta Glucanase according industry standard : unités de bêta-glucanase selon la norme industrielle).

10. Procédé selon l'une des revendications 4 à 9, selon lequel, pour la fabrication du vin mousseux, l'enzyme avec activité de β-glucanase agit au moins 2 à 3 semaines sur l'adjuvant de fermentation.

11. Boisson fermentée, à l'exception de la bière, pouvant être obtenue par un procédé selon l'une des revendications 4 à 10.
